# EUROPEAN PATENT APPLICATION

(11) **EP 3 142 224 A1**
(43) Date of publication of application: **15.03.2017**
(21) Application number: 16187562.0
(22) Date of filing: 07.09.2016
(51) Int. Cl.: H02K 1/14

(54) **SINGLE PHASE PERMANENT MAGNET MOTOR**

(30) Priority: 10.09.2015 CN 201510574978
(71) Applicant: Johnson Electric S.A., 3280 Murten (CH)
(72) Inventor: Li, Yue, Hong Kong (HK); Zhou, Chui You, Hong Kong (HK); Wang, Yong, Hong Kong (HK); Li, Yong, Hong Kong (HK)
(74) Representative: Hocking, Adrian Niall

(57) **Abstract**

A single phase permanent magnet motor (10) includes a stator (20) and a rotor (50, 60, 70, 80) rotatable relative to the stator (20). The stator (20) includes a stator core (30) and a winding (39) wound around the stator core (30). The rotor (50, 60, 70, 80) includes a rotor core (53, 63, 73, 83) and a plurality of permanent magnetic poles (55, 65, 75, 85). The stator core (30) includes at least one first stator core lamination (310) and at least one second stator core lamination (320) stacked with the first stator core lamination (310). Inner structures of the first stator core lamination (310) and the second stator core lamination (320) are different. This structure reduces motor's vibration and noise, avoids possible startup dead point and improves the motor (10) startup reliability.

## Description

### FIELD OF THE INVENTION

The present invention relates to a single phase permanent magnet motor, and in particular to a single phase permanent magnet motor having a laminated stator core.

### BACKGROUND OF THE INVENTION

In a conventional single phase permanent magnet motor, a stator core is provided as an integral structure, i.e. an outer ring portion and teeth of a stator core are formed at the same time into an integral structure. Large slot openings are formed between pole shoes of each two adjacent teeth for facilitating the winding of windings. In the single phase permanent magnet motor as such configured, the presence of the large slot openings can make the motor generate an unduly large cogging torque. The cogging torque can result in the motor generating vibration and noise. Furthermore, because of the limitation of the large slot openings, the motor has a small startup angle and poor startup reliability.

### SUMMARY OF THE INVENTION

Thus, there is a desire for a new single phase permanent magnet motor with improved startup reliability.

The present invention provides a single phase permanent magnet motor includes a stator and a rotor rotatable relative to the stator. The stator includes a stator core and a winding wound around the stator core. The stator core includes at least one first stator core lamination, and at least one second stator core lamination stacked with the first stator core lamination. Inner structures of the first stator core lamination and the second stator core lamination are different. The rotor includes a rotor core and a plurality of permanent magnetic poles.

Preferably, the at least one first stator core lamination and the at least one second stator core lamination are alternately stacked along an axial direction of the motor.

Preferably, the stator core comprises at least one group of first stator core laminations and at least one group of second stator core laminations, each group of first stator core laminations comprises at least one said stator core lamination, each group of second stator core laminations comprises at least one said stator core lamination, the at least one group of first stator core laminations and the at least one group of second stator core laminations are alternately stacked along an axial direction of the motor.

Preferably, the first stator core lamination comprises a first outer ring portion, a first inner ring portion, and a plurality of first winding portions connected between the first inner ring portion and the first outer ring portion.

Preferably, the second stator core lamination comprises a second outer ring portion, a plurality of second winding portions extending inwardly from the second outer ring portion, and a pole shoe extending from a distal end of each second winding portion toward two circumferential sides of the second winding portion, a slot opening is defined between each two adjacent pole shoes, the first outer ring portion and the second outer ring portion are stacked along an axial direction of the motor, the first winding portions and the second winding portions are stacked along the axial direction of the motor, the first inner ring portion and the pole shoes of the second stator core lamination are stacked along the axial direction of the motor.

Preferably, portions of each pole shoe at opposite sides of a center line of one corresponding second winding portion are asymmetric about the center line of the corresponding second winding portion.

Preferably, the portions of each pole shoe at opposite sides of the center line of the corresponding second winding portion have different lengths, or inner surfaces of the portions of each pole shoe at opposite sides of the center line of the corresponding second winding portion are spaced from a center of the rotor by different distances.

Preferably, the permanent magnetic poles are arranged on an outer circumferential surface of the rotor core, an outer circumferential surface of the permanent magnetic pole and an inner circumferential surface of the first inner ring portion are respectively located on two concentric cylindrical surfaces.

Preferably, the permanent magnetic poles are arranged on an outer circumferential surface of the rotor core, an outer circumferential surface of the permanent magnetic pole is spaced from a center of the rotor by a distance that progressively decreases from a circumferential center to two circumferential ends of the outer circumferential surface.

Preferably, the single phase permanent magnet motor further includes a positioning slot defined in the first inner ring portion between each two adjacent first winding portions, the positioning slot extends continuously or discontinuously along an axial direction of the motor, and each positioning slot is spaced from the two adjacent first winding portions by different distances.

Preferably, the number of the positioning slots is equal to or an integer times of the number of the permanent magnetic poles of the rotor.

Preferably, the positioning slot is located between an outer circumferential surface and an inner circumferential surface of the first inner ring portion.

Preferably, the positioning slot is exposed out of an inner circumferential surface of the first inner ring portion.

Preferably, a magnetic bridge is defined in a segment of the first inner ring portion between each two adjacent first winding portions, and the first inner ring portion has a magnetic reluctance at the magnetic bridge greater than a magnetic reluctance at the positioning slot.

Preferably, an inner circumferential surface of the first inner ring portion and an inner circumferential surface of the pole shoes are located on a same cylindrical surface.

Preferably, the first winding portions and the first outer ring portion are separately formed.

Preferably, a magnetic bridge is formed on a segment of the first inner ring portion between each two adjacent first winding portions.

Preferably, each magnetic bridge is located at a middle position between the corresponding two adjacent first winding portions.

Preferably, the first inner ring portion defines at least one groove in an outer surface of each magnetic bridge or defines at least one hole between inner and outer surfaces of each magnetic bridge, and the grooves or holes extend in an axial direction of the motor.

Preferably, the first inner ring portion defines a plurality of grooves or holes in each magnetic bridge, and the magnetic bridge has a maximum magnetic reluctance at a middle position of the magnetic bridge.

The single phase permanent magnet motor of embodiments of the present invention includes a stator core that is formed by stacking a first stator core lamination and a second stator core lamination with different structures. This reduces the vibration and noise produced in the conventional motor which uses only the stator core laminations with large slot openings, which can reduce the cogging torque of the motor and improve the reliability of the motor startup.

### BRIEF DESCRIPTION OF THE DRAWINGS

Fig. 1 illustrates a single phase permanent magnet motor according to a first embodiment of the present invention.
Fig. 2 illustrates the single phase permanent magnet motor of Fig. 1, with an outer housing being removed.
Fig. 3 illustrates the single phase permanent magnet motor of Fig. 1, with the outer housing, stator winding and rotary shaft being removed.
Fig. 4 illustrates a first stator core lamination of the single phase permanent magnet motor of Fig. 3.
Fig. 5 illustrates a second stator core lamination of the single phase permanent magnet motor of Fig. 3.
Fig. 6 illustrates a rotor core and permanent magnet members of the single phase permanent magnet motor of Fig. 3.
Fig. 7 illustrates a first stator core lamination according to a second embodiment of the present invention.
Fig. 8 illustrates a rotor core and permanent magnet members according to the second embodiment of the present invention.
Fig. 9 illustrates a first stator core lamination according to a third embodiment of the present invention.
Fig. 10 illustrates a second stator core lamination according to the third embodiment of the present invention.
Fig. 11 illustrates a rotor core and permanent magnet members according to the third embodiment of the present invention.
Fig. 12 illustrates a first stator core lamination according to a fourth embodiment of the present invention.
Fig. 13 illustrates a second stator core lamination, a rotor core and permanent magnet members according to the fourth embodiment of the present invention.
Fig. 14 illustrates a first stator core lamination according to a fifth embodiment of the present invention.
Fig. 15 illustrates a second stator core lamination according to the fifth embodiment of the present invention.

### DETAILED DESCRIPTION OF THE PREFERRED EMBODIMENTS

It should be noted that the figures are not drawn to scale and that elements of similar structures or functions are generally represented by like reference numerals for illustrative purposes throughout the figures. It also should be noted that the figures are only intended to facilitate the description of the preferred embodiments. The figures do not illustrate every aspect of the described embodiments and do not limit the scope of the present disclosure.

### First Embodiment

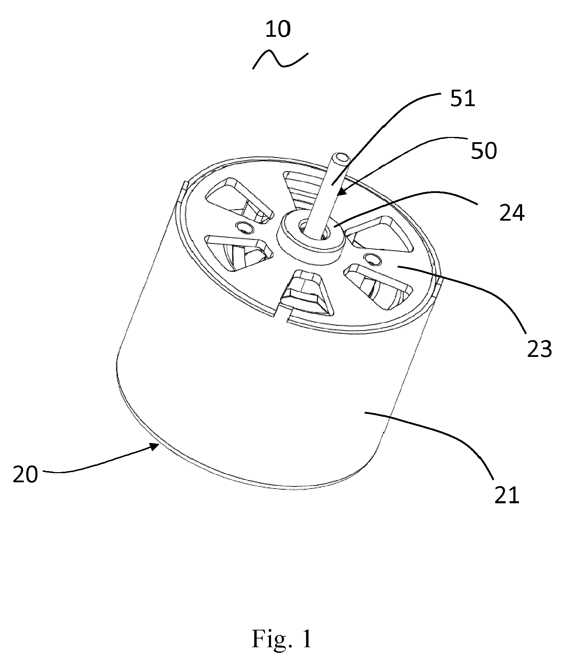

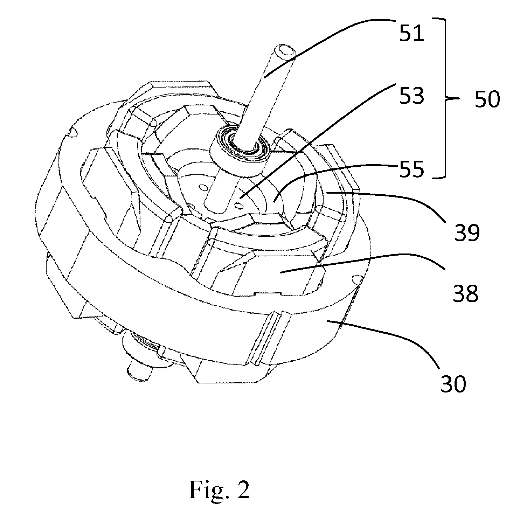

Referring to Fig. 1 to Fig. 5, the single phase permanent magnet motor 10 in accordance with a first embodiment of the present invention includes a stator 20 and a rotor 50 rotatable relative to the stator.

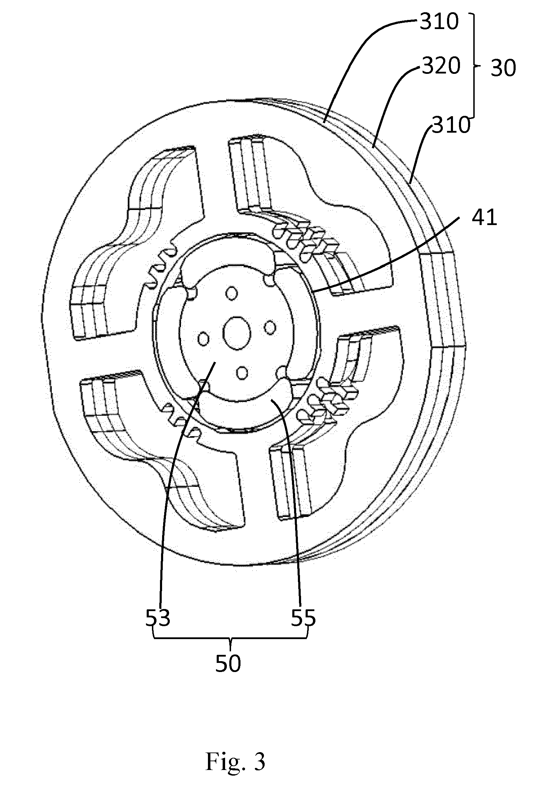

The stator 20 includes a cylindrical outer housing 21 with one open end, an end cap 23 mounted to the open end of the outer housing 21, a stator core 30 mounted in the outer housing 21, an insulating bracket 38 mounted to the stator core 30, and a winding 39 wound around the stator core and supported by the insulating bracket 38. The stator core 30 is formed by stacking a plurality of first stator core laminations 310 and a plurality of second stator core laminations 320. Each first stator core lamination 310 includes a first outer ring portion 311, a first inner ring portion 315, and a plurality of first winding portions 313 connected between the first inner and outer ring portions. The second stator core lamination 320 includes a second outer ring portion 321, a plurality of second winding portions 323 extending inwardly from the second outer ring portion 321, and a pole shoe 325 extending from a distal end to two circumferential sides of each second winding portion 323, with a slot opening 327 defined between each two adjacent pole shoes 325. The first outer ring portion 311 and the second outer ring portion 321 are stacked along an axial direction of the motor 10, the first winding portions 313 and the second winding portions 323 are stacked along the axial direction of the motor, and the first inner ring portion 315 and the corresponding pole shoes 325 are stacked along the axial direction of the motor. In one specific embodiment, the first stator core laminations 310 and the second stator core laminations 320 are alternately stacked in a predetermined pattern. The present invention is not intended to limit the number of the first stator core laminations 310 and the second stator core laminations 320 to a particular value, and the pattern in which the first and second stator core laminations 310 and 320 are alternately arranged may also vary depending upon actual requirements. For example, each first stator core lamination 310 is alternately arranged with one or two second stator core lamination 320 or, alternatively, each group of two first stator core laminations 310 is alternately arranged with each group of two or three second stator core laminations 320. In the embodiment illustrated in Fig. 3, each first stator core lamination 310 is alternately arranged with each second stator core lamination 320. It should be understood that it is not intended to limit the number of the stator core laminations to three layers.

The winding 39 is wound around the first winding portions 313 and second winding portions 323 that are stacked along the axial direction of the motor, and is isolated from the stator core 30 by the insulating bracket 38. The rotor 50 is received within the first inner ring portion 315 and the pole shoes 325 that are stacked along the axial direction of the motor. The stacked first inner ring portion 315 and pole shoes 325, and the rotor 50 bound an air gap 41 for allowing the rotor 50 to rotate relative to the stator 20.

The rotor 50 includes a rotary shaft 51, a rotor core 53, and a plurality of permanent magnetic poles 55. The rotary shaft 51 passes through a center of the rotor core 53 and is fixed to the rotor core 53. One end of the rotary shaft 51 is mounted to the end cap 23 of the stator 20 through a bearing 24, and the other end of the rotary shaft 51 is mounted to a bottom of the cylindrical outer housing 21 of the stator 20 through another bearing, such that the rotor 50 is capable of rotating relative to the stator 20.

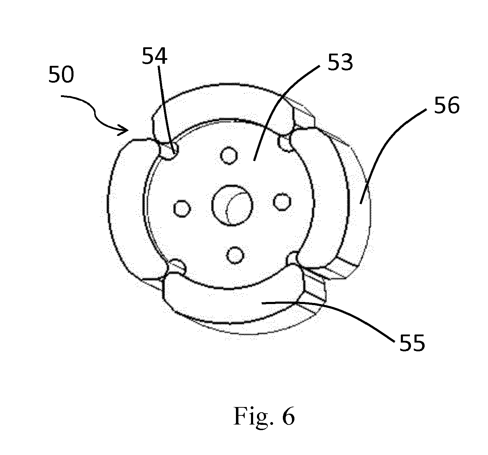

Referring to Fig. 6, the permanent magnetic poles 55 are formed by a plurality of permanent magnet members 56 such as four permanent magnet members 56. An outer circumferential surface of the rotor core 53 defines a plurality of axially-extending grooves 54. Each groove 54 is disposed at a junction of two adjacent permanent magnet members 56 to reduce magnetic leakage. The permanent magnet members 56 are mounted to the outer circumferential surface of the rotor core 53. An outer circumferential surface of the permanent magnet members 56 and an inner circumferential surface of the first inner ring portion 315 are respectively located on two concentric cylindrical surfaces, and the inner circumferential surface of the first inner ring portion and the inner circumferential surfaces of the pole shoes 325 are located on the same cylindrical surface, such that an even air gap is defined between the stator 20 and the rotor 50. The term "ring" used in this disclosure refers to a closed structure formed by extending continuously along a circumferential direction, such as circular ring, square ring, rectangle ring, or the like.

In the present embodiment, a segment of the first inner ring portion 315 between each two adjacent first winding portions 313 is formed with a magnetic bridge 316. The magnetic bridge 316 has a greater magnetic reluctance than other portions on opposite sides of the magnetic bridge 316. Preferably, the magnetic bridge 316 is located at a middle position between the corresponding two adjacent first winding portions 313. Alternatively, the magnetic bridge 316 may be offset from the middle position between the two adjacent first winding portions 313. Specifically, a groove 317 is defined in an outer circumferential surface of the first inner ring portion 315 at a region corresponding to each magnetic bridge 316. There may be one or more grooves 317, for example, three grooves 317. When each magnetic bridge 316 has multiple grooves 317, the groove 317 farther away from the first winding portion 313 can have a greater size and hence have a greater magnetic reluctance. That is, the groove 317 closer to the first winding portion 313 has a smaller size (particularly, a radial depth), and the magnetic reluctance of the magnetic bridge 316 is smaller; the groove 317 farther away from the first winding portion 313 has a greater size (particularly, the radial depth), and the magnetic reluctance of the magnetic bridge 316 is greater. Preferably, the magnetic bridge 316 has a maximum magnetic reluctance at the middle position.

The first stator core lamination 310 and the second stator core lamination 320 are made from magnetic-conductive soft magnetic material. For example, the first stator core lamination 310 and the second stator core lamination 320 are formed by stacking magnetic laminations (silicon laminations commonly used in the industry) along an axial direction of the motor. Preferably, in the first stator core lamination 310, the first winding portions 313 are uniformly spaced along the circumferential direction of the motor. Each first winding portion 313 extends substantially radially from the first inner ring portion 315 to the first outer ring portion 311.

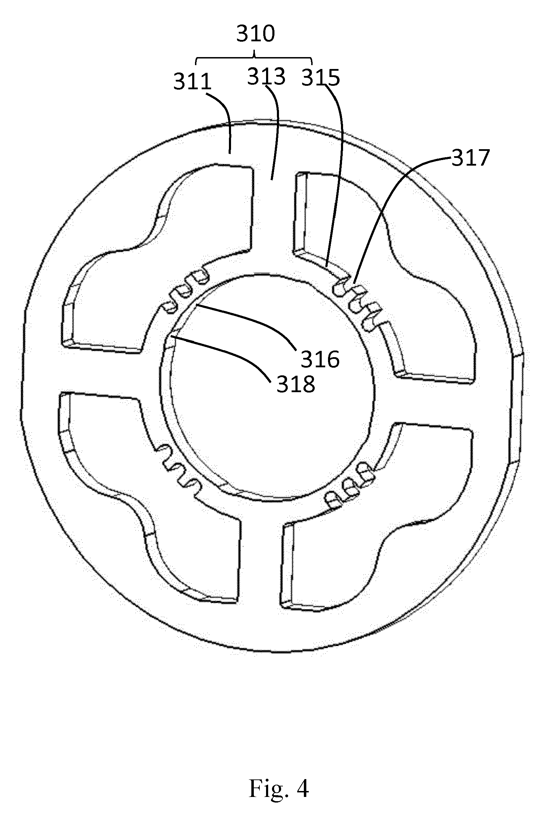

In addition, referring to Fig. 4, the first inner ring portion 315 between each two adjacent first winding portions 313 (including the portions of the first inner ring portion 315 radially aligned with the first winding portions 313) defines a positioning slot 318. Each positioning slot 318 is spaced from the two adjacent first winding portions 313 by different distances and is closer to one of the two adjacent first winding portions. The number of the positioning slots 318 is the same as the number of the poles of the stator and the number of the ring-shaped permanent magnetic poles, or the number of the positioning slots 318 is an integer times of the number of the permanent magnetic poles of the rotor. In the present embodiment, the number of the positioning slots 318 is four. In the present embodiment, the stator winding is a concentrated winding and, therefore, the number of the winding portions is the same as the number of the poles of the stator. In an alternative embodiment, the number of the stator winding portions can be an integer times of the number of the stator poles, such as, two times, three times or the like. In this embodiment, the positioning slots 318 are spaced along the axial direction of the motor, and are disposed in the inner circumferential surface of the first inner ring portion 315. In an alternative embodiment, the positioning slots 318 extend continuously along the axial direction of the motor.

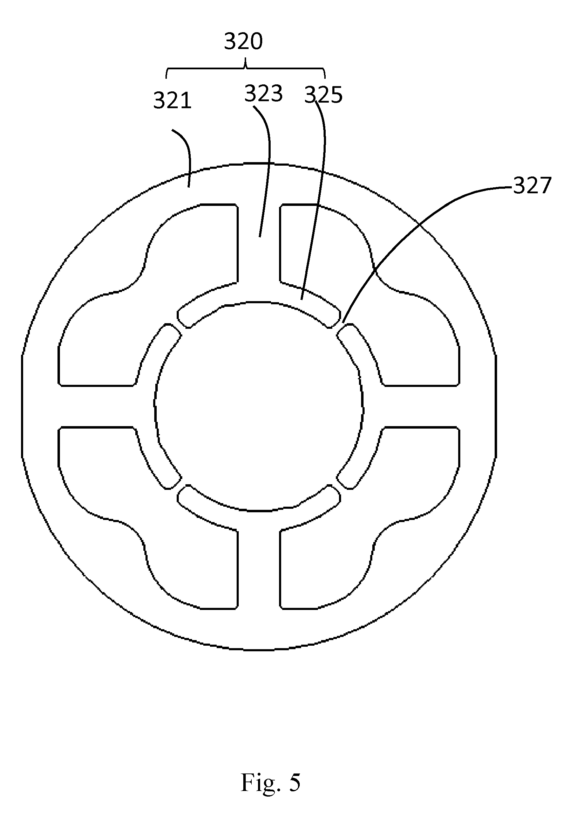

Preferably, when the positioning slot is formed in the first inner ring portion of the first stator core lamination, the second stator core lamination is configured to have a symmetrical structure. As shown in Fig. 5, portions of the pole shoe 325 of the second stator core lamination 320 at opposite sides of a center line of the second winding portion 323 are symmetrical about the center line of the second winding portion 323, and the inner surface of the pole shoe 325 and the inner surface of the first inner ring portion 315 are located on the same cylindrical surface.

When the motor 10 is not energized, i.e. at an initial position, due to the positioning slots, the pole axis of the rotor magnetic pole 55 is offset from the center line of the stator winding portion, i.e. a stator pole axis, such that the rotor 50 is offset from a dead point. An angle formed between the pole axis of the rotor magnetic pole 55 and the stator pole axis is referred to as a startup angle. In this embodiment, the startup angle is greater than 45 degrees electric angle and less than 135 degrees electric angle. When the winding 39 of the motor 10 is supplied with an electric current in one direction, the rotor 50 can be started along one direction. When the winding 39 of the motor 10 is supplied with an electric current in an opposite direction, the rotor 50 can be started along an opposite direction. It should be understood that, when the startup angle is equal to 90 degrees electric angle, the rotor 50 can be easily started in both directions, i.e. it is the easiest angle to achieve bidirectional startup. When the startup angle is offset from the 90-degree electric angle, the rotor is easier to start in one direction than in the opposite direction. It has been found from a large number of experiments that, when the startup angle is in the range of 45 degrees to 135 degrees electric angle, the startup of the rotor 50 in both directions has good reliability.

### Second Embodiment

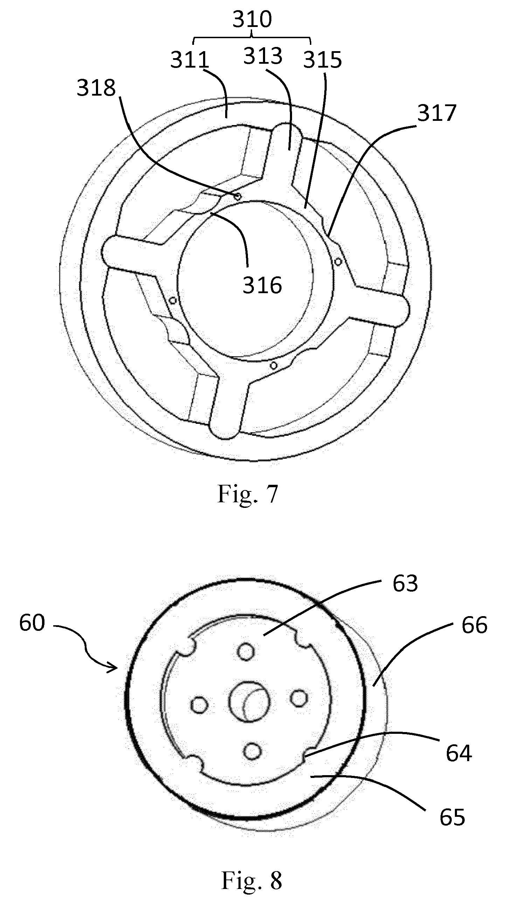

Referring to Fig. 7, different from the first embodiment, a groove 317 is defined in the outer circumferential surface of the first inner ring portion 313 at a region corresponding to each magnetic bridge 316. The number of the groove 317 is only one. The groove 317 can be of any shape such as circular arc shape or square shape. In addition, the positioning slots 318 are located between the outer circumferential surface and inner circumferential surface of the first inner ring portion 315 and are invisible positioning slots. Preferably, the positioning slots 318 are closer to the inner circumferential surface of the first inner ring portion 315. The positioning slots 318 may be spaced or extend continuously along the axial direction of the motor.

Referring to Fig. 8, in the present embodiment, the rotor 60 includes a rotor core 63 and ring shaped permanent magnetic poles 65 arranged along a circumferential direction of the rotor 60. An outer circumferential surface of the ring shaped permanent magnetic poles 65 is concentric with the inner circumferential surface of the first inner ring portion 315, such that an even air gap 41 is formed therebetween. Specifically, the inner surface of the first inner ring portion 315 is located on a circle centered at the center of the rotor 60 in an axial plane view. An outer surface of the ring shaped permanent magnetic poles 65 is cylindrical and is located on a circle centered at the center of the rotor 60. That is, the inner circumferential surface of the first inner ring portion 315 is concentric with the outer circumferential surface of the permanent magnetic poles 65, such that an even air gap is formed between the inner circumferential surface of the first inner ring portion 315 and the outer circumferential surface of the permanent magnetic poles 65.

The ring shaped permanent magnetic poles 65 may be formed by a single ring shaped permanent magnet member 66 mounted to the outer circumferential surface of the rotor core 63. An outer circumferential surface of the rotor core 63 defines a plurality of axially extending grooves 64. Each groove 64 is located at a junction between two permanent magnetic poles to reduce magnetic leakage. It should be understood that the ring shaped permanent magnetic poles 65 may also be formed by a plurality of arcuate permanent magnet members. It should also be understood that the rotor 60 of the present embodiment may be used in combination with the stator 20 of the first embodiment, and the stator of the present embodiment may also be used in combination with the rotor 50 of the first embodiment.

Preferably, when the positioning slot 318 is formed in the first inner ring portion 315 of the first stator core lamination 310, the second stator core lamination 320 is configured to have a symmetrical structure. Specifically, portions of each pole shoe at opposite sides of a center line of the corresponding second winding portion are symmetrical about the center line of the second winding portion.

### Third Embodiment

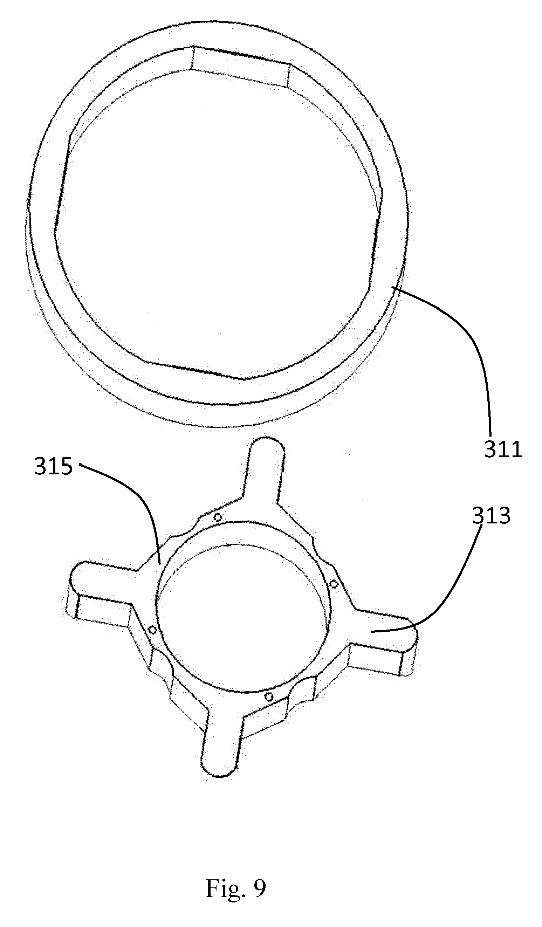

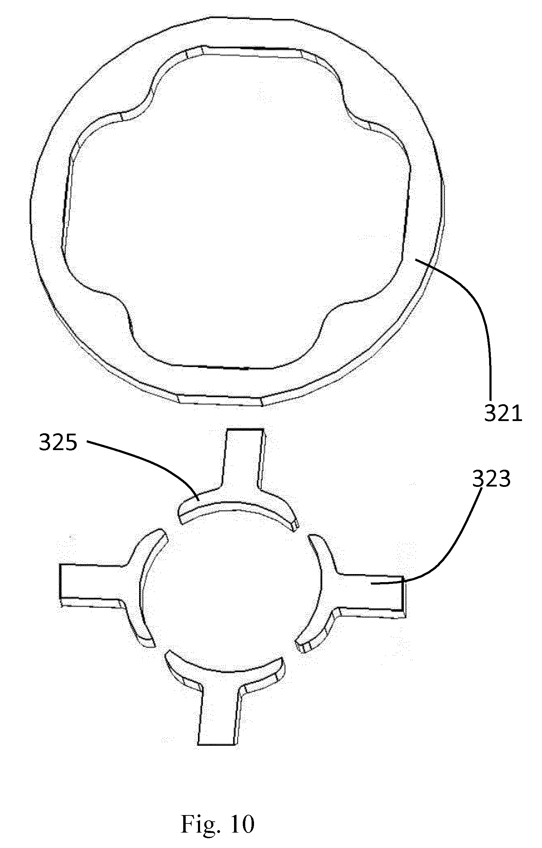

Referring to Fig. 9 and Fig. 10, different from the first embodiment or the second embodiment, the stator core of this embodiment is of a split-type structure in order to increase the winding efficiency of the stator winding 39. Specifically, the first winding portions 313 and the first outer ring portion 311 are separately formed and then assembled together; in the present embodiment, the first winding portions 313 and the first inner ring portion 315 are integrally formed into an integral structure, and this integral structure is separate from the first outer ring portion 311. Likewise, the second winding portions 323 and the second outer ring portion 321 are separately formed and then assembled together; in the present embodiment, each second winding portions 323 and a corresponding pole shoe 325 are integrally formed into an integral structure, and this integral structure is separate from the second outer ring portion 321. In assembly, the first winding portions 313 and the second winding portions 323 are stacked with each other. The insulating bracket is then mounted and the windings are wound. The first outer ring portions 311 and the second outer ring portions 321 are stacked to form a cylinder. After winding of the windings, the combination of the first winding portions 313 and the second winding portions 323 are mounted inside the cylinder formed by stacked first outer ring portions 311 and second outer ring portions 321, thus achieving the stator core with windings.

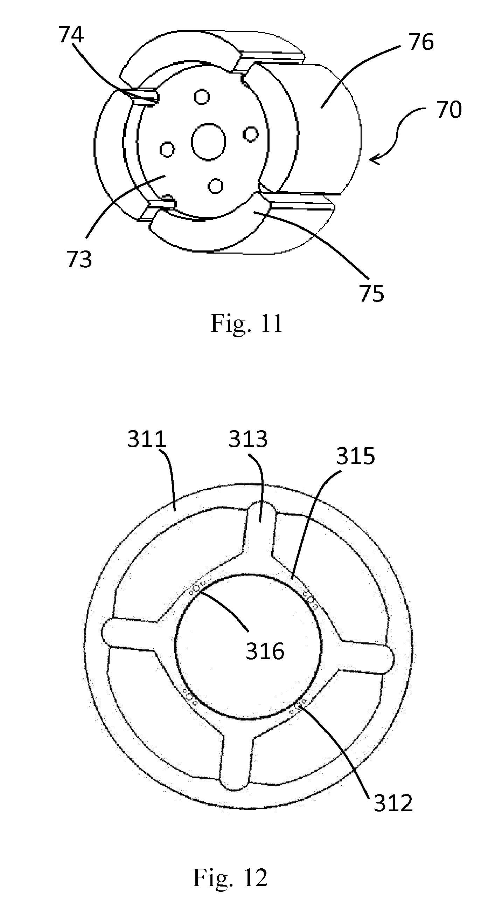

In addition, in this embodiment, referring to Fig. 11, the rotor 70 includes a plurality of permanent magnetic poles 75 arranged along a circumferential direction of the rotor 70. An outer surface of each permanent magnetic pole 75 is an arc surface. The outer circumferential surface of the permanent magnetic pole 75 is spaced from a center of the rotor 70 by a distance that progressively decrease from a circumferential center to two circumferential ends of the outer circumferential surface, such that the permanent magnetic pole 75 and the inner circumferential surface of the first inner ring portion 315 form therebetween a symmetrical uneven air gap. Preferably, the symmetrical uneven air gap has a maximum thickness that is at least 1.5 times of its minimum thickness.

Each permanent magnetic pole 75 is formed by a single permanent magnet member 76 or, alternatively, may be formed by joining multiple permanent magnet members. The rotor 70 further includes a rotor core 73. The permanent magnet member 76 is mounted to an outer circumferential surface of the rotor core 73. The outer circumferential surface of the rotor core 73 defines a plurality of axially extending grooves 74. Each groove 74 is located at a junction between two adjacent permanent magnetic poles 75 to reduce magnetic leakage. In order to form a symmetrical uneven air gap between the permanent magnetic pole 75 and the inner circumferential surface of the first inner ring portion 315, the outer circumferential surface of the permanent magnet member 76 is spaced from the center of the rotor 70 by a distance that progressively decreases from a circumferential center to two circumferential ends of the outer circumferential surface of the permanent magnet member 76. Specifically, the outer circumferential surface of the rotor core 73 and the inner circumferential surface of the first inner ring portion 315 are concentric circles in an axial plan view, and a thickness of the permanent magnet member 76 progressively decreases from a circumferential center to two circumferential ends thereof Alternatively, the thickness of the permanent magnet member 76 is uniform, and the outer circumferential surface of the rotor core 73 is spaced from the center of the rotor 70 by a distance that progressively decreases from a circumferential center to two circumferential ends, such that the distance between the outer circumferential surface of the permanent magnet member 76 and the rotor center progressively decreases from the circumferential center to the two circumferential ends.

It is noted that, in the above embodiments, a radial size of the first inner ring portion 311 of the first stator core lamination 310 at the magnetic bridge 316 is less than a radial size of the first inner ring portion 311 at the positioning slot 318. As such, even if the positioning slot 318 is formed, the magnetic reluctance of the first inner ring portion 311 at the magnetic bridge 316 is still the greatest.

### Fourth Embodiment

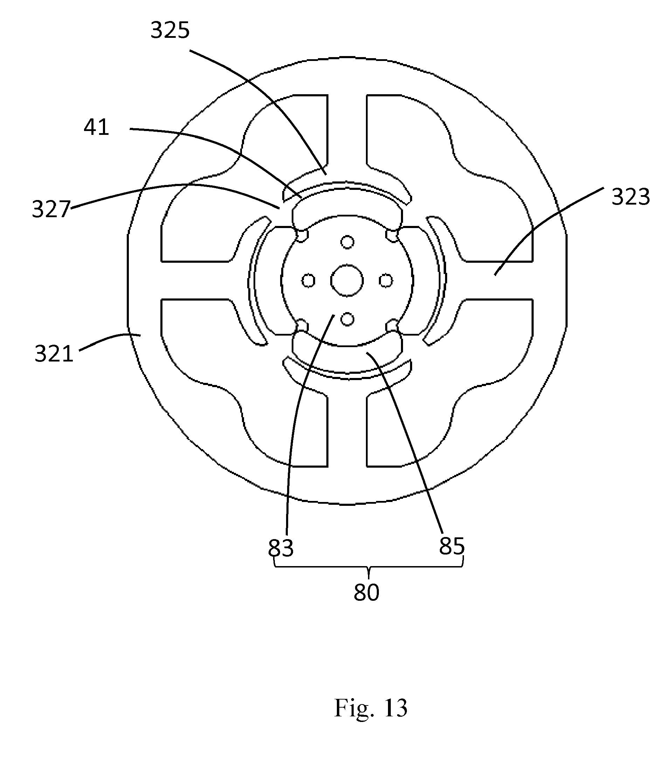

Referring to Fig. 12 and Fig. 13, different from the first embodiment, in this embodiment, a through hole 312 is formed in the first inner ring portion 315 of the first stator core lamination at a region corresponding to each magnetic bridge 316. There may be one or more through holes 312. The magnetic bridge 316 has a maximum magnetic reluctance at a middle position between two adjacent first winding portions 313. For example, when each magnetic bridge 316 has three through holes 312, the through holes 312 extend along an axial direction of the motor, and the through hole 312 farther away from the first winding portion 313 has a larger size. That is, the closer the through hole 312 is to the first winding portion 313, the smaller size (especially a diameter of the through hole) the through hole 312 has; the farther the through hole 312 is from the first winding portion 313, the larger size (especially diameter of the through hole) the through hole 312has, and the greater magnetic reluctance the magnetic bridge 316 has. When the magnetic bridge 316 is disposed on the first inner ring portion 315 at a middle position between the two adjacent first winding portions 313, the through hole 312 at the middle position between the two adjacent first winding portions 313 has the largest diameter, and the magnetic reluctance is also the greatest at this position.

In this embodiment, the first stator core lamination does not define a positioning slot. Portions of each pole shoe 325 of the second stator core lamination 325 at opposite sides of a center line of the corresponding second winding portion 323 are asymmetrical about the center line of the second winding portion 323. As shown in Fig. 13, the inner surface of the pole shoe 325 is spaced from the rotor center by a changing distance. For example, the inner surface of each pole shoe 325 is spaced from the rotor center by a distance that progressively increases from one end to the other end along the circumferential direction of the motor, such that the inner surface of the pole shoe 325 and the rotor define an uneven air gap therebetween, thereby achieving the positioning result.

In this embodiment, the permanent magnetic poles 85 of the rotor 80 are mounted to the outer surface of the rotor core 83. The outer surface of each rotor permanent magnetic pole 85 is an arc surface, and the outer circumferential surface of the permanent magnetic pole 85 is located on a cylindrical surface centered at the center of the rotor.

### Fifth Embodiment

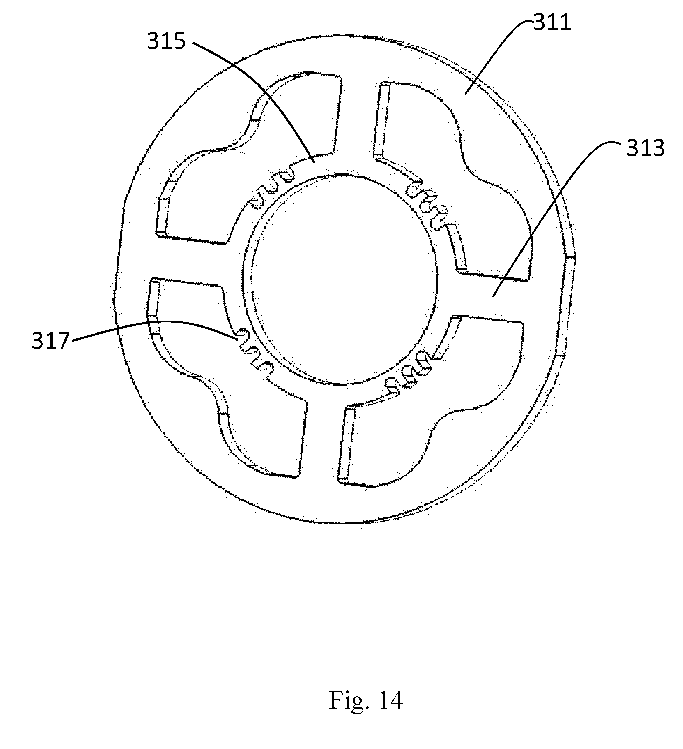

Referring to Fig. 14, in this embodiment, a groove 317 is defined in the outer circumferential surface of the first inner ring portion 315 of the first stator core lamination at a region corresponding to each magnetic bridge. There may be one or more grooves 317. The magnetic bridge has a maximum magnetic reluctance at a middle position between two adjacent first winding portions 13. Likewise, the first stator core lamination does not define a positioning slot.

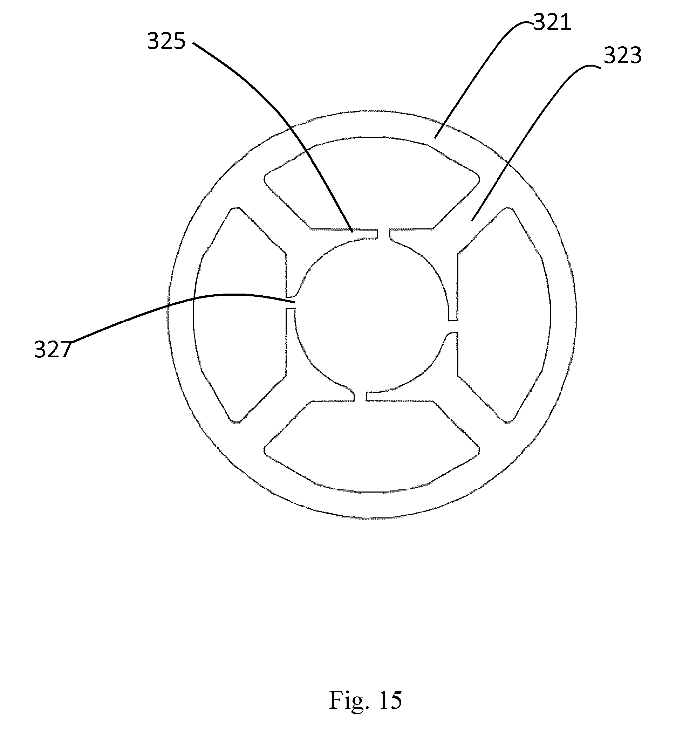

Referring to Fig. 15, in this embodiment, portions of the pole shoe 325 of the second stator core lamination at opposite sides of a center line of the second winding portion 323 have different lengths. In this case, the inner surfaces of the pole shoes 325 may also be located on a cylindrical surface centered at the center of the rotor. That is, the inner surface of the pole shoe 325 is spaced from the rotor center by a uniform distance, which likewise makes the initial position of the rotor offset from the dead point.

It should be understood that, the rotors and stators of the above embodiments may be used in different combinations, i.e. the rotor of each embodiment may be used in combination with the stator of any embodiment, and the stator of each embodiment may be used in combination with the rotor of any embodiment.

The single phase permanent magnet motor of embodiments of the present invention includes a stator core that is formed by stacking first stator core laminations and second stator core laminations with different inner structures. This reduces the vibration and noise produced in the conventional motor which uses only the stator core laminations with large slot openings, which can reduce the cogging torque of the motor and improve the reliability of the motor startup.

Although the invention is described with reference to one or more preferred embodiments, it should be appreciated by those skilled in the art that various modifications are possible. Therefore, the scope of the invention is to be determined by reference to the claims that follow.

## Claims

1. A single phase permanent magnet motor (10) comprising:
a stator (20) comprising a stator core (30) and a winding (39) wound around the stator core (30), the stator core (30) comprising:
at least one first stator core lamination (310), and
at least one second stator core lamination (320) stacked with the first stator core lamination (310), wherein inner structures of the first stator core lamination (310) and the second stator core lamination (320) are different; and
a rotor (50, 60, 70, 80) rotatable relative to the stator (20), the rotor (50, 60, 70, 80) comprising a rotor core (53, 63, 73, 83) and a plurality of permanent magnetic poles (55, 65, 75, 85).

2. The single phase permanent magnet motor (10) of claim 1, wherein the stator core (30) comprises at least one group of first stator core laminations (310) and at least one group of second stator core laminations (320), each group of first stator core laminations (310) comprises at least one said first stator core lamination (310), each group of second stator core laminations (320) comprises at least one said second stator core lamination (320), the at least one group of first stator core laminations (310) and the at least one group of second stator core laminations (320) are alternately stacked along an axial direction of the motor (10).

3. The single phase permanent magnet motor (10) of any one of claims 1-2, wherein the first stator core lamination (310) comprises a first outer ring portion (311), a first inner ring portion (315), and a plurality of first winding portions (313) connected between the first inner ring portion (315) and the first outer ring portion (311).

4. The single phase permanent magnet motor (10) of claim 3, wherein the second stator core lamination (320) comprises a second outer ring portion (321), a plurality of second winding portions (323) extending inwardly from the second outer ring portion (321), and a pole shoe (325) extending from a distal end of each second winding portion (323) toward two circumferential sides of the second winding portion (323), a slot opening (327) is defined between each two adjacent pole shoes (325), the first outer ring portion (311) and the second outer ring portion (321) are stacked along an axial direction of the motor (10), the first winding portions (313) and the second winding portions (323) are stacked along the axial direction of the motor (10), the first inner ring portion (315) and the pole shoes (325) of the second stator core lamination (320) are stacked along the axial direction of the motor (10).

5. The single phase permanent magnet motor (10)of claim 4, wherein portions of each pole shoe (325) at opposite sides of a center line of one corresponding second winding portion (323) are asymmetric about the center line of the corresponding second winding portion (323), the portions of each pole shoe (325) at opposite sides of the center line of the corresponding second winding portion (323) have different lengths, or inner surfaces of the portions of each pole shoe (325) at opposite sides of the center line of the corresponding second winding portion (323) are spaced from a center of the rotor (50, 60, 70, 80) by different distances.

6. The single phase permanent magnet motor (10) of any one of claims 4-5, wherein an inner circumferential surface of the first inner ring portion (315) and an inner circumferential surface of the pole shoes (325) are located on a same cylindrical surface.

7. The single phase permanent magnet motor (10) of any one of claims 3-6, wherein the permanent magnetic poles (55, 65, 85) are arranged on an outer circumferential surface of the rotor core (53, 63, 83), an outer circumferential surface of the permanent magnetic pole (55, 65, 85) and an inner circumferential surface of the first inner ring portion (315) are respectively located on two concentric cylindrical surfaces.

8. The single phase permanent magnet motor (10) of any one of claims 3-6, wherein the permanent magnetic poles (75) are arranged on an outer circumferential surface of the rotor core (73), an outer circumferential surface of the permanent magnetic pole (75) is spaced from a center of the rotor (70) by a distance that progressively decreases from a circumferential center to two circumferential ends of the outer circumferential surface.

9. The single phase permanent magnet motor (10) of any one of claims 3-8, further comprising a positioning slot (318) defined in the first inner ring portion (315) between each two adjacent first winding portions (313), the positioning slot (318) extends continuously or discontinuously along an axial direction of the motor (10), and each positioning slot (318) is spaced from the two adjacent first winding portions (313) by different distances.

10. The single phase permanent magnet motor (10) of claim 9, wherein the number of the positioning slots (318) is equal to or an integer times of the number of the permanent magnetic poles (55, 65, 75, 85) of the rotor (50, 60, 70, 80).

11. The single phase permanent magnet motor (10) of any one of claims 9-10, wherein a magnetic bridge (316) is defined in a segment of the first inner ring portion (315) between each two adjacent first winding portions (313), and the first inner ring portion (315) has a magnetic reluctance at the magnetic bridge (316) greater than a magnetic reluctance at the positioning slot (318).

12. The single phase permanent magnet motor (10) of any one of claims 3-11, wherein the first winding portions (313) and the first outer ring portion (311) are separately formed.

13. The single phase permanent magnet motor (10) of any one of claims 3-10 and 12, wherein a magnetic bridge (316) is formed on a segment of the first inner ring portion (315) between each two adjacent first winding portions (313).

14. The single phase permanent magnet motor (10) of claim 13, wherein each magnetic bridge (316) is located at a middle position between the corresponding two adjacent first winding portions (313).

15. The single phase permanent magnet motor (10) of claim 14, wherein the first inner ring portion (315) defines at least one groove (317) in an outer surface of each magnetic bridge (316) or defines at least one hole (312) between inner and outer surfaces of each magnetic bridge (316), the grooves (317) or holes (312) extend in an axial direction of the motor (10), and the magnetic bridge (316) has a maximum magnetic reluctance at a middle position of the magnetic bridge (316).
